# EUROPEAN PATENT SPECIFICATION

(11) **EP 2 377 076 B1**
(45) Date of publication and mention of the grant of the patent: **18.03.2020**
(21) Application number: 09748861.3
(22) Date of filing: 14.10.2009
(51) Int. Cl.: G06K 19/07

(54) **METHOD AND SYSTEM FOR ITEM LEVEL UHF RFID TAG WITH LOW FREQUENCY POWER ASSIST**
VERFAHREN UND SYSTEM FÜR EIN ARTIKELEBENEN UHF-RFID-ETIKETT MIT NIEDERFREQUENZ-LEISTUNGSHILFE
PROCÉDÉ ET SYSTÈME POUR UNE ÉTIQUETTE RFID UHF AU NIVEAU D'UN ARTICLE AVEC UNE ALIMENTATION ASSISTÉE BASSE FRÉQUENCE

(30) Priority: 16.12.2008 US 336068
(43) Date of publication of application: 19.10.2011
(73) Proprietor: Sensormatic Electronics, LLC, Boca Raton, FL 33487 (US)
(72) Inventor: ALEXIS, Mark, Wellington, FL 33414 (US); LIAN, Ming-Ren, Boca Raton, FL 33428 (US); SHAFER, Gary Mark, Charlotte, NC 28277 (US)
(74) Representative: Hafner & Kohl Patent- und Rechtsanwälte Partnerschaft mbB
(86) International application number: PCT/US2009/005636
(87) International publication number: WO 2010/071665

(56) References cited:
- WO-A2-2007/079491
- JP-A- 2004 343 410
- US-A1- 2008 058 029

## Description

### FIELD OF THE INVENTION

The present invention generally relates to electronic security systems, and in particular to a method and system for increasing the read range of a radio frequency identification ("RFID") tag by supplying an additional electronic article surveillance ("EAS") antenna system to the RFID tag in order to provide power to the RFID device in the RFID tag.

### BACKGROUND OF THE INVENTION

Item interrogation systems are common in the art. One type of item interrogation system is an RFID system. RFID systems are used in many different applications, including for example in retail environments, to obtain information relating to items tagged with RFID identifiers. For example, an RFID tag can be attached or integrated within a product or product packaging. Using an RFID interrogator (also referred to herein as an "RFID reader"), which may be a fixed, portable or handheld device, RFID tags within the interrogation zone of the interrogator may be activated and provide information regarding the item associated with the RFID tag (e.g., product descriptor, serial number, location, etc.).

These RFID tags receive and respond to radio frequency ("RF") signals to provide information, for example, related to the product to which the RFID tag is attached. This is typically accomplished using a standard air interface protocol such as the Electronic Product Code ("EPC") Radio Frequency Identity Protocol. Such information may include inventory information relating to items on a shelf or items in a warehouse. In general, modulators within the RFID tags may transmit back a signal using a transmitter or reflect back a signal to the RFID readers. This transmitted/reflected signal is referred to as a backscatter signal. Additionally, information may be communicated to the RFID tags (e.g., encoding information) using RFID encoders. Thus, RFID systems are typically used to monitor the inventory of products in a retail environment and provide product identification using the storage and remote retrieval of data using RFID tags or transponders.

Typical item interrogation systems provide one or more item level Ultra High Frequency ("UHF") tags, which receive interrogation signals from the interrogation unit, i.e. the RFID reader. The interrogation unit can also supply power signals in order to power up and activate the tags. However, due to their small antenna size, the tags may not always be able to absorb enough power from the interrogation unit to be powered up and activated. If the power being absorbed from the interrogation unit is not sufficient, the tag cannot participate in an RFID inventory round.

Electronic article surveillance ("EAS") systems are detection systems that allow the identification of a marker or tag within a given detection zone. EAS systems have many uses, but most often they are used as security systems for preventing shoplifting in stores or removal of property in office buildings. EAS systems come in many different forms and make use of a number of different technologies. For example, a typical acousto-magnetic EAS system includes an electronic detection unit, tags and/or markers, and a detacher or deactivator. The detection units can, for example, be formed as pedestal units, buried under floors, mounted on walls, or hung from ceilings. The detection units are usually placed in high traffic areas, such as entrances and exits of stores or office buildings. In operation, the EAS unit transmits a detection signal at a predetermined, e.g., 58kHz, frequency. An activated EAS tag resonates at approximately a corresponding frequency. The EAS detector can detect this resonant signal within the EAS detection zone, to thereby determine than an active EAS tag is present. While it is becoming more and more common to implement combination tags that include EAS, e.g., acousto- magnetic and RFID elements, the underlying RFID and EAS systems, and the resultant tags, are not integrated to the point where aspects of one system can be used to provide a benefit to the other system. For example, a system does not currently exist that that allow the range of RFID tag activation and reading to be extended by providing a supplemental means for passive RFID chip power.

Therefore, what is needed is a supplemental antenna system that would provide a source of power to the tags and the RFID chip, thus obviating the need for the tags to rely solely on the RFID reader for its source of power.

US 2008/0058029 A1 shows an active-type RFID tag. The tag includes a first and a second antenna circuit. The second antenna circuit is used to receive electric waves that are randomly generated and to charge a second battery.

### SUMMARY OF THE INVENTION

The present invention advantageously provides a method and system for increasing the read range of a radio frequency identification ("RFID") tag by supplying an additional antenna system in order to provide power to the RFID device within the tag, where the power is received from an electronic article surveillance ("EAS") system.

In one aspect of the invention, a combination RFID/EAS system according to claim 1 is provided.

In yet another aspect of the invention, a method of powering a security tag according to claim 9 is provided.

Additional aspects of the invention are defined in the dependent claims. It is to be understood that both the foregoing general description and the following detailed description are exemplary and explanatory only and are not restrictive of the invention, as claimed.

### BRIEF DESCRIPTION OF THE DRAWINGS

A more complete understanding of the present invention, and the attendant advantages and features thereof, will be more readily understood by reference to the following detailed description when considered in conjunction with the accompanying drawings wherein:
FIG. 1 is a block diagram of an exemplary surveillance system constructed in accordance with the principles of the present invention;
FIG. 2 is a block diagram of the dual-antenna design of an RFID tag constructed in accordance with the principles of the present invention;
FIG. 3 is a block diagram of an EAS pedestal system constructed in accordance with the principles of the present invention; and
FIG. 4 is a block diagram of an RFID shelf reader system constructed in accordance with the principles of the present invention

### DETAILED DESCRIPTION OF THE INVENTION

Before describing in detail exemplary embodiments that are in accordance with the present invention, it is noted that the embodiments reside primarily in combinations of apparatus components and processing steps related to implementing a system and method for powering radio frequency identification ("RFID") tags via the use of an additional antenna circuit such that the RFID tag does not rely solely on the RFID reader for its activation power. Accordingly, the system and method components have been represented where appropriate by conventional symbols in the drawings, showing only those specific details that are pertinent to understanding the embodiments of the present invention so as not to obscure the disclosure with details that will be readily apparent to those of ordinary skill in the art having the benefit of the description herein.

As used herein, relational terms, such as "first" and "second," "top" and "bottom," and the like, may be used solely to distinguish one entity or element from another entity or element without necessarily requiring or implying any physical or logical relationship or order between such entities or elements.

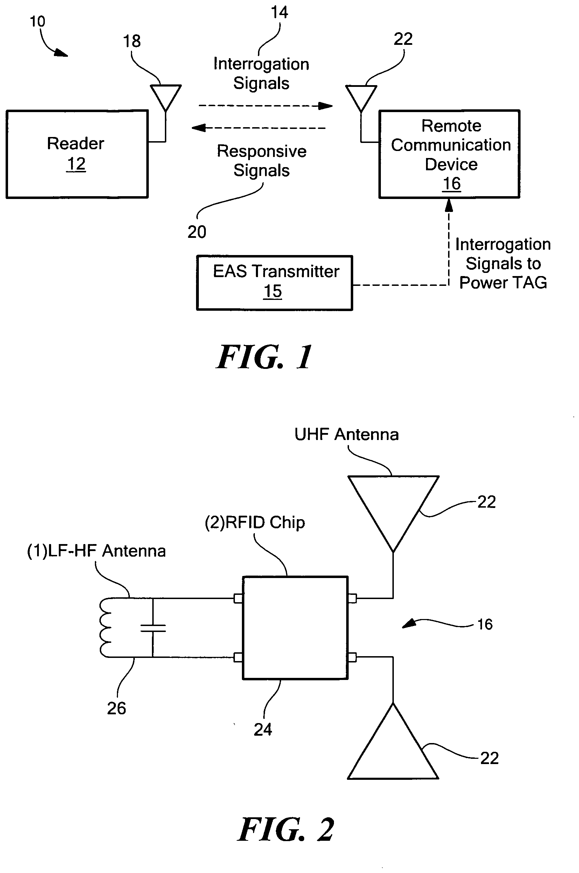

One embodiment of the present invention advantageously provides a method and system for providing an additional antenna system responsive to signals from an electronic article surveillance ("EAS") with the purpose of providing power to the RFID chip resulting in the extension of the read range of the RFID tag. Referring now to the drawing figures in which like reference designators refer to like elements there is shown in FIG. 1 a surveillance system constructed in accordance with the principles of the present invention and designated generally as "10". System 10 represents a surveillance system that may include both the theft prevention features of an Electronic Article Surveillance (EAS) security system with the item identification features of a Radio Frequency Identification (RFID) identification system. It should be noted that the present invention is not limited in use to a particular type of EAS system and can be used in various types of EAS systems, such as for example a 58 KHz AM EAS system, or a Swept RF EAS system.

System 10 has the capability of alerting staff employees of a potential theft while the customer is still inside the store. Combining EAS technology with RFID technology can potentially provide manufacturers great benefit since they can use RFID to track inventory through the supply chain and use EAS to secure items on the retail floor.

Referring again to FIG. 1, reader 12 could be in the form of, for example, a reader unit used to transmit interrogation signals 14 to a remote communication device, i.e., tag 16. Reader 12 can be an RFID reader or a combination EAS/RFID reader that can include a radio frequency module (transmitter and receiver), a control unit, a coupling element to the tags, and a power supply. Additionally, many readers are equipped with interface hardware to enable transmission of data received from the tags to another system, e.g., PC, automatic control systems, etc.

Reader 12 includes antenna 18, which emits radio signals to activate the tag 16 and read and/or write data to it. Antenna 18 provides the conduit between the tag 16 and the reader 12, which controls the system's data acquisition and communication. The electromagnetic field produced by antenna 18 is constantly present if multiple tags are continually passing through the interrogation zone. If constant interrogation is not an application requirement, then a sensing device can activate the electromagnetic field thereby conserving power.

Tag 16 is an electronic transmitter/responder, typically placed on or embedded within an object, representing the actual data-carrying device of an RFID interrogation system. Tag 16 responds to a transmitted or communicated request signal 14 for its encoded data from an RFID interrogator, i.e., reader 12. Tags 16 emit wireless signals over an open air interface using radio frequency waves to communicate with one another. Tags 16 include an active or passive RFID component. Tags 16 may optionally include an EAS element such as an acousto-magnetic ("AM") component.

The reader 12 emits radio waves in an interrogation range, the range varying depending upon the power output and the frequency used. As a tag 16 enters and passes through the electromagnetic zone, it senses the reader's activation signal. Reader 12 then decodes the encoded data within the tag's integrated circuit (IC) and passes the data to a host computer for processing.

Typically, the antenna 18 is packaged with the transceiver and decoder in reader 12. Reader 12 can be a hand-held device or in a fixed-position/fixed-mount configuration depending upon the desired application. Antenna 18 is capable of transmitting EAS and/or RFID interrogation signals 14 to tag 16 and is also capable of receiving responsive communication signals 20 from tag 16. Tag 16 typically includes an RFID antenna 22, which absorbs the power from the reader's RFID transmit signal. However, in order to provide additional power to tag 16 to enable it to operate without sole dependence upon reader 12 for its operational power, the present invention advantageously provides an additional antenna system that allows the RFID read range of tag 16 to be expanded. System 10 also includes EAS transmitter 15 that transmits interrogation signals to tag 16. As discussed in greater detail below, EAS transmitter 15 such as the type often embedded in EAS floor pedestals, can provide power, via EAS interrogation signals, to activate tag 16 when power from reader 12 may not otherwise be sufficient to do so.

FIG. 2 illustrates a tag 16 constructed in accordance with the principles of the present invention. Tag 16 includes RFID chip 24, UHF antenna circuit 22 and additional low frequency antenna circuit 26. While UHF antenna circuit 22 operates to decode the RFID interrogation signals 14 from reader 12, low frequency antenna circuit 26 serves to harvest energy from other power sources such as EAS pedestals and EAS transmit antennas embedded in, for example, shelf reader systems. Low frequency antenna circuit 26 is inductively coupled to the transmitter of tag 16 and operates in the near field read region.

In one embodiment, antenna circuit 26 resonates at a low frequency, such as 58KHz. For example, circuit 26 may include a resonant RLC circuit implemented as an air or ferrite core coil with a capacitor, as shown in FIG. 2. A 58 KHz EAS system could detect the tag's resonant RLC circuit and identify it as a normal anti-theft EAS target. The EAS system works in cooperation with UHF RFID reader 12 to provide energy to tag 16 at or near 58 KHz during an RFID inventory round of communications between reader 12 and tag 16. The additional power provided to tag 16 in this fashion allows tag 16 to power up and participate in the UHF inventory round, without relying only on the RFID reader 12 to supply the necessary power. Thus, an EAS detection system can provide not only detection of assets but the additional capability of collecting RFID data from these assets with enhanced RFID read performance. This same enhanced detection could apply to EAS systems that operate at other frequencies.

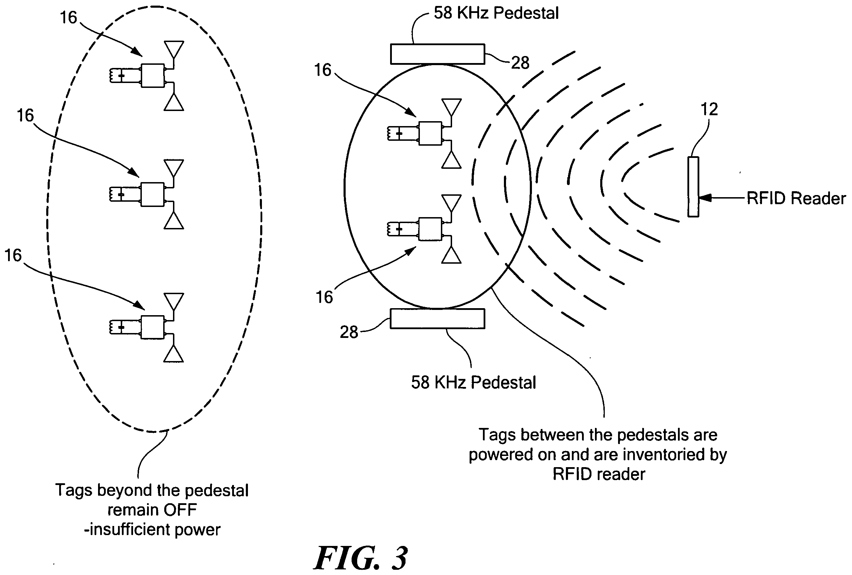

An example of an implementation of an RFID tag 16 using low frequency antenna circuit 26 is illustrated in FIG. 3. FIG. 3 represents the layout of a 58 KHz pulsed EAS pedestal system with RFID reader 12, multiple tags 16, and a pair of EAS pedestals. Tag 16 is designed as a passive device which utilizes an EAS pedestal system to harvest power not only from the RFID reader 12 but also from the field emitted by a conventional 58 kHz EAS pedestal system. Because only certain tags 16 can detect and be powered by reader 12, the present invention provides a dual power scheme by allowing low frequency antenna circuit 26 within each tag to resonate at a given frequency. This provides an advantage over conventional passive UHF RFID tags that use only the incident energy from reader 12 to power the passive RFID circuitry in the RFID chip 24.

The present invention provides the ability to reliably read an RFID tag 16 as it passes through the EAS pedestals 28, without reading item level tags located near the exit pedestals. Advantageously, the present invention provides an extra tag activation source, the EAS pedestals 28, to assure that only tags 16 between EAS pedestals 28 are powered on and inventoried by RFID reader 12, and solving the problem of reading tags outside the zone between the pedestals that, in prior art systems, has prevented reliable detection and reporting of items leaving a retail store.

In alternate embodiments, the alternate power source is not an EAS transmitter. For example, tag 16 may be powered by a device that transmits signals at a predetermined frequency. Because low frequency antenna circuit 26 resonates at a predetermined frequency, it can harvest energy from other sources that are transmitting signals at a resonating frequency. Thus, the present invention is not limited to only EAS transmitters as the alternate power source but any power source provided the transmitted signal is at a proper frequency.

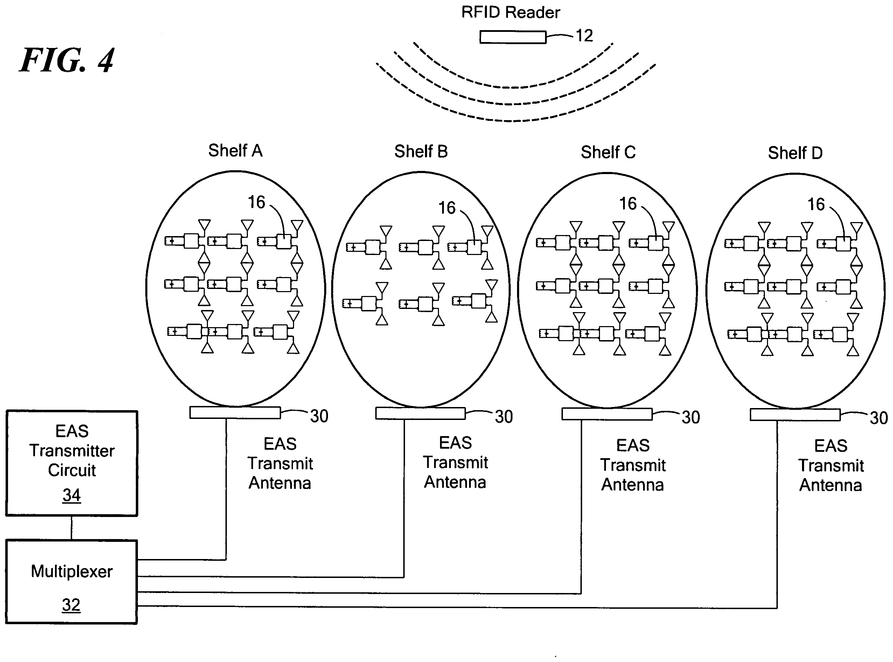

FIG. 4 shows an alternate exemplary utilization of the present invention. In this embodiment, an RFID reader 12 is utilized in a shelf-inventory system. Shelves A through D each contain items that are to be interrogated by RFID reader 12. Each item includes a tag 16 attached or otherwise affixed to it. Each shelf includes an EAS transmit antenna 30. The present invention provides the ability to use an alternate power source emitted from a multiplexed system of low frequency (58KHz for example) loop antennas, i.e. EAS transmit antennas 30, arranged in store shelves to power the dual power RFID tags 16 such that only tags 16 "illuminated" by the low frequency power source 30 are powered and therefore visible in an RFID inventory round. Multiplexer ("MUX") 32, powered by EAS transmitter circuit 34 controls each EAS transmit antenna 30. Thus, particular shelves or shelf locations can be selectively energized via MUX 32 and inventoried with greater accuracy, and at lower cost when compared to conventional shelf reader systems.

In order to be powered by alternate source EAS transmit antenna 30, each tag 16 includes a loop antenna circuit 26 that couples with the transmitter field of EAS antenna 30 and produces enough energy to power RFID chip 24 in tag 16. An example of how each RFID chip 24 is powered up by EAS transmit antenna 30 is now provided. Assuming the frequency of the EAS antenna transmit field is 58 kHz, the field strength (H) at the approximate center of the transmit antenna pedestals is 0.1 oersted, and RFID chip 24 requires 5 micro watts (5x10⁻⁶ watts) to be operational, then a coil designed to be 100 turns wound as a square coil, e.g., 1.5 in. x 1.5 in., will result in a voltage of approximately 0.5 volts produced at the center of EAS pedestal 30. The internal impedance of a coil of this type is typically 20 ohms. The load of RFID chip 24 antenna circuit 26 is designed to match this coil impedance, i.e. the load would be 20 ohms. Thus the power transferred to the load would be approximately 7 mW, which is more than sufficient to power RFID chip 24.

In an exemplary embodiment, the power to RFID chip 24 is provided via the use of a rectifier diode and capacitor circuit or other energy storage device. Because the power transmission system is pulsed, with, in the above example, 58 KHz pulses issued at 90 Hz with a duration of 1.6 ms, tag 16 would need to harvest energy from the transmit field and store enough energy in its energy storage circuit or device to keep RFID chip 24 powered until the next burst from EAS transmit antenna 30. Once powered up, RFID tag 24 will be "awake" and able to communicate with RFID reader 12 in an RFID inventory round.

The present invention can be realized in hardware, software, or a combination of hardware and software. Any kind of computing system, or other apparatus adapted for carrying out the methods described herein, is suited to perform the functions described herein.

A typical combination of hardware and software could be a specialized or general purpose computer system having one or more processing elements and a computer program stored on a storage medium that, when loaded and executed, controls the computer system such that it carries out the methods described herein. The present invention can also be embedded in a computer program product, which comprises all the features enabling the implementation of the methods described herein, and which, when loaded in a computing system is able to carry out these methods. Storage medium refers to any volatile or non-volatile storage device.

Computer program or application in the present context means any expression, in any language, code or notation, of a set of instructions intended to cause a system having an information processing capability to perform a particular function either directly or after either or both of the following a) conversion to another language, code or notation; b) reproduction in a different material form.

In addition, unless mention was made above to the contrary, it should be noted that all of the accompanying drawings are not to scale.

## Claims

1. A combination radio frequency identification ("RFID") / electronic article surveillance ("EAS") system (10), the system (10) comprising:
an RFID reader (12) generating RFID interrogation signals (14);
an EAS transmitter (15) generating EAS interrogation signals; and
a security tag (16) arranged to receive the EAS and RFID interrogation signals and transmit a response signal, the security tag (16) comprising:
a radio frequency identification ("RFID") device;
a first antenna circuit (22) coupled to the RFID device, the first antenna circuit (22) adapted to decode interrogation signals from an RFID reader (12); and
a second antenna circuit (26) coupled to the RFID device, the second antenna circuit (26) adapted to induce energy from signals received from at least the EAS transmitter (15); **characterized in that**
the EAS transmitter is or comprises an EAS pedestal or EAS transmit antennas embedded in a shelf reader system.

2. The system of Claim 1, wherein the first antenna circuit (22) operates at a higher frequency than the second antenna circuit.

3. The system of Claim 1, wherein the second antenna circuit (26) of the security tag (16) is inductively coupled to the EAS transmitter (15).

4. The system of Claim 1, wherein the second antenna circuit (26) of the security tag (16) includes a resonant circuit detectable by the EAS transmitter (15) to identify the resonant circuit as an EAS target device.

5. The system of Claim 1, wherein the energy induced by the second antenna circuit (26) of the security tag (16) allows the security tag (16) to be activated and participate in an RFID inventory round with the RFID reader (12).

6. The system of Claim 1, further including an energy storage element, wherein the induced energy is stored by the energy storage element.

7. The system of Claim 1, wherein the stored energy is greater than energy consumed by the security tag (16) such that the security tag (16) remains powered on between transmission bursts of the EAS transmitter (15).

8. The system of Claim 1, wherein the EAS transmitter (15) is part of the RFID reader (12).

9. A method of powering a security tag (16), the security tag (16) receiving interrogation signals (14) from a radio frequency identification ("RFID") device, the method comprising:
receiving an RFID signal from the RFID device;
receiving a transmission signal from an alternate device; and
inducing energy from the received transmission signal, the induced energy allowing the security tag (16) to be activated and participate in an RFID inventory round with the RFID device, **characterized in that**
the alternate device is an electronic article surveillance ("EAS") transmitter, whereby the EAS transmitter is or comprises an EAS pedestal or EAS transmit antennas embedded in a shelf reader system.

10. The method of Claim 9, further comprising storing the induced energy, wherein the stored energy is greater than energy consumed by the security tag (16) such that the security tag (16) remains powered on between bursts of the transmission signal.

## Patentansprüche

1. Kombiniertes System (10) zur Funkfrequenzerkennung (RFID) und elektronischen Artikelüberwachung (EAS), wobei das System aufweist:
eine RFID-Lesevorrichtung (12), die RFID-Abfragesignale (4) erzeugt;
einen EAS-Transmitter (15), der EAS-Abfragesignale erzeugt; und
ein Sicherheitsetikett (16), das eingerichtet ist, die EAS- und RFID-Abfragesignale zu empfangen und ein Antwortsignal zu senden, wobei das Sicherheitsetikett (16) aufweist:
eine Funkfrequenzerkennungs (RFID) -Vorrichtung;
eine erste Antennenschaltung (22), die an die RFID-Vorrichtung gekoppelt ist, wobei die erste Antennenschaltungen (22) eingerichtet ist, Abfragesignale von einer RFID-Lesevorrichtung (12) zu dekodieren; und
eine zweite Antennenschaltung (26), die an die RFID-Vorrichtung gekoppelt ist, wobei die zweite Antennenschaltung (26) eingerichtet ist, Energie aus Signalen zu induzieren, die von zumindest dem EAS-Transmitter (15) empfangen wurden; **dadurch gekennzeichnet, dass**
der EAS-Transmitter eine EAS-Säule oder EAS-Sendeantennen, die in einem Regallesesystem eingebettet sind, ist oder aufweist.

2. System nach Anspruch 1, wobei die erste Antennenschaltung (22) bei einer höheren Frequenz arbeitet als die zweite Antennenschaltung.

3. System nach Anspruch 1, wobei die zweite Antennenschaltung (26) des Sicherheitsetiketts (16) induktiv an den EAS-Transmitter (15) gekoppelt ist.

4. System nach Anspruch 1, wobei die zweite Antennenschaltung (26) des Sicherheitsetiketts (16) einen Resonanzkreis aufweist, der durch den EAS-Transmitter (15) detektierbar ist, um den Resonanzkreis als EAD-Zielvorrichtung zu identifizieren.

5. System nach Anspruch 1, wobei es die durch die zweite Antennenschaltung (26) des Sicherheitsetiketts (16) induzierte Energie dem Sicherheitsetikett (16) erlaubt, aktiviert zu werden und in einer RFID-Inventarrunde mit der RFID-Lesevorrichtung (12) teilzunehmen.

6. System nach Anspruch 1, ferner aufweisend ein Energiespeicherelement, wobei die induzierte Energie durch das Energiespeicherelement gespeichert wird.

7. System nach Anspruch 1, wobei die gespeicherte Energie größer als eine Energie ist, die von dem Sicherheitsetikett (16) verbraucht wird, so dass das Sicherheitsetikett (16) zwischen Übertragungsbursts des EAS-Transmitters (15) eingeschaltet bleibt.

8. System nach Anspruch 1, wobei der EAS-Transmitter (15) Teil der RFID-Lesevorrichtung (12) ist.

9. Verfahren zur Energieversorgung eines Sicherheitsetiketts (16), wobei das Sicherheitsetikett (16) Abfragesignale (14) von einer RFID (Funkfrequenzerkennung)-Vorrichtung empfängt, wobei das Verfahren umfasst:
Empfangen eines RFID-Signals von der RFID-Vorrichtung;
Empfangen eines Übertragungssignals von einer alternativen Vorrichtung; und
Induzieren von Energie aus dem empfangenen Übertragungssignal, wobei die induzierte Energie es dem Sicherheitsetikett (16) ermöglicht, aktiviert zu werden und in einer RFID-Inventarrunde mit der RFID-Vorrichtung teilzunehmen,
**dadurch gekennzeichnet, dass**
die alternative Vorrichtung ein Transmitter elektronischer Artikelüberwachung (EAS) ist, wobei der EAS-Transmitter eine EAS-Säule oder EAS-Sendeantennen, die in einem Regallesesystem eingebettet sind, ist oder aufweist.

10. Verfahren nach Anspruch 9, ferner umfassend das Speichern der induzierten Energie, wobei die gespeicherte Energie größer ist als eine Energie, die von dem Sicherheitsetikett (16) verbraucht wird, so dass das Sicherheitsetikett (16) zischen Bursts der Übertragung eingeschaltet bleibt.

## Revendications

1. Système combiné (10) d'identification par radiofréquence (« RFID ») / surveillance électronique d'articles (« EAS »), le système (10) comprenant :
un lecteur RFID (12) destiné à produire des signaux d'interrogation RFID (14) ;
un émetteur EAS (15) destiné à produire des signaux d'interrogation EAS ; et
une étiquette de sécurité (16) conçue pour recevoir les signaux d'interrogation EAS et RFID et pour émettre un signal de réponse, l'étiquette de sécurité (16) comprenant :
un dispositif d'identification par radiofréquence (« RFID ») ;
un premier circuit d'antenne (22) couplé au dispositif RFID, le premier circuit d'antenne (22) étant adapté à décoder les signaux d'interrogation en provenance d'un lecteur RFID (12) ; et
un second circuit d'antenne (26) couplé au dispositif RFID, le second circuit d'antenne (26) étant adapté à induire de l'énergie à partir des signaux reçus à partir d'au moins l'émetteur EAS (15) ; **caractérisé en ce que**
l'émetteur EAS est ou comprend un piédestal EAS ou des antennes émettrices EAS, incorporés dans un système lecteur des rayons.

2. Le système de la Revendication 1, dans lequel le premier circuit d'antenne (22) fonctionne à une fréquence plus haute que le second circuit d'antenne.

3. Le système de la Revendication 1, dans lequel le second circuit d'antenne (26) de l'étiquette de sécurité (16) est relié par couplage inductif à l'émetteur EAS (15).

4. Le système de la Revendication 1, dans lequel le second circuit d'antenne (26) de l'étiquette de sécurité (16) comprend un circuit résonant détectable par l'émetteur EAS (15) afin d'identifier le circuit résonant en tant que dispositif cible de l'EAS.

5. Le système de la Revendication 1, dans lequel l'énergie induite par le second circuit d'antenne (26) de l'étiquette de sécurité (16) permet l'activation de l'étiquette de sécurité (16) et sa participation dans une session d'inventaire RFID avec le lecteur RFID (12).

6. Le système de la Revendication 1, comprenant en outre un élément de stockage d'énergie, l'énergie induite étant stockée par l'élément de stockage d'énergie.

7. Le système de la Revendication 1, dans lequel l'énergie stockée est supérieure à l'énergie consommée par l'étiquette de sécurité (16), de sorte que l'étiquette de sécurité (16) reste excitée entre des rafales d'émission de l'émetteur EAS (15).

8. Le système de la Revendication 1, dans lequel l'émetteur EAS (15) fait partie du lecteur RFID (12).

9. Procédé d'excitation d'une étiquette de sécurité (16), l'étiquette de sécurité (16) recevant des signaux d'interrogation (14) en provenance d'un dispositif d'identification par radiofréquence (« RFID »), le procédé comprenant :
la réception d'un signal RFID en provenance du dispositif RFID ;
la réception d'un signal d'émission en provenance d'un autre dispositif ; et
l'induction d'énergie à partir du signal d'émission reçu, l'énergie induite permettant l'activation de l'étiquette de sécurité (16) et sa participation dans une session d'inventaire RFID avec le dispositif RFID, **caractérisé en ce que** l'autre dispositif est un émetteur de surveillance électronique d'articles (« EAS »), l'émetteur EAS étant ou comprenant un piédestal EAS ou des antennes émettrices EAS, incorporés dans un système lecteur des rayons.

10. Le procédé de la Revendication 9, comprenant en outre le stockage de l'énergie induite, l'énergie stockée étant supérieure à l'énergie consommée par l'étiquette de sécurité (16), de sorte que l'étiquette de sécurité (16) reste excitée entre des rafales du signal d'émission.
